# EUROPÄISCHE PATENTSCHRIFT

(11) **EP 3 345 840 B1**
(45) Veröffentlichungstag und Bekanntmachung des Hinweises auf die Patenterteilung: **18.09.2019**
(21) Anmeldenummer: 17208319.8
(22) Anmeldetag: 19.12.2017
(51) Int. Cl.: B64G 1/68, B64G 1/66, G01V 9/00

(54) **ERFASSUNGSSYSTEM**
DETECTION SYSTEM
SYSTÈME DE DÉTECTION

(30) Priorität: 29.12.2016 DE 102016125853
(43) Veröffentlichungstag der Anmeldung: 11.07.2018
(73) Patentinhaber: Deutsches Zentrum für Luft- und Raumfahrt e.V., 51147 Köln (DE)
(72) Erfinder: Hauer, Lars-Christian, 28355 Bremen (DE); Fexer, Sebastian, 28717 Bremen (DE); Bauer, Waldemar, 28790 Schwanewede (DE)
(74) Vertreter: FARAGO Patentanwälte

(56) Entgegenhaltungen:
- JP-A- H11 227 699
- US-A- 5 608 414
- US-A1- 2012 318 925
- KASSEL P C ET AL: "METAL-OXIDE SILICON CAPACITOR DETECTORS FOR MEASURING MICROMETEROROID AND SPACE-DEBRIS FLUX", JOURNAL OF SPACECRAFT AND ROCKETS, AMERICAN INSTITUTE OF AERONAUTICS AND ASTRONAUTICS,REASTON,VA, US, Bd. 32, Nr. 4, 1. Juli 1995 (1995-07-01), Seiten 710-718, XP000523499, ISSN: 0022-4650
- BAUER WALDEMAR ET AL: "Development of in-situ Space Debris Detector", ADVANCES IN SPACE RESEARCH, ELSEVIER, AMSTERDAM, NL, Bd. 54, Nr. 9, 7. August 2014 (2014-08-07) , Seiten 1858-1869, XP029049115, ISSN: 0273-1177, DOI: 10.1016/J.ASR.2014.07.035

## Beschreibung

Die Erfindung betrifft ein Erfassungssystem für Weltraummüll, insbesondere ein Satellitenkommunikationsantennensystem zur Weltraummüll-Detektion. Weiterhin betrifft die Erfindung ein Verfahren zum Betreiben des Systems.

Seit Beginn der operationellen Raumfahrt mit dem Start des ersten künstlichen Erdsatelliten Sputnik 1 im Oktober 1957 wurden etliche Raketen, Satelliten, Sonden und Raumfähren in die Erdumlaufbahn geschossen. Bei jedem einzelnen Start wird Müll produziert, z.B. durch missionsbedingte Weltraummüll-Objekte, wobei der Müll in der Erdumlaufbahn auf der Höhe verbleibt, in der er mit der dort vorherrschenden Relativgeschwindigkeit fliegt. Dieser Weltraummüll gefährdet in allen Erdumlaufbahnen die Raumfahrt. Deshalb ist eine Erfassung mit allen möglichen Methoden notwendig. Am 10. Februar 2009 sind zum ersten Mal in der Geschichte der Menschheit zwei Satelliten in der Erdumlaufbahn kollidiert. Bei der Kollision handelte es sich um die beiden Kommunikationssatelliten Iridium 33 sowie den russischen Kosmos 2251, die sich über Sibirien in einer Höhe von 789 km über der Erdoberfläche befanden. Durch den gegenseitigen Aufprall, welcher mit einer Relativgeschwindigkeit von 11,6 km/s (= 41.760 km/h) erfolgte, resultierte ein Trümmerfeld, bestehend aus einer Vielzahl neu erzeugter Weltraummüll-Objekte, die größtenteils auch heute noch als Weltraummüll die Erde umkreisen.

Teile mit einer Größe geringer als 5 cm können im Low Earth Orbit (LEO) vom Boden aus kaum geortet werden. Kollisionen von Satelliten mit Weltraummüll-Objekten mit einem Durchmesser von mehr als ca. 1 cm Durchmesser führen in der Regel zu einem vollständigen Verlust der Mission. Die Anzahl der Weltraummüll-Objekte in den Umlaufbahnen nimmt mit abnehmendem Durchmesser exponentiell zu.

Für eine Vermessung der Weltraummüll-Objekte im Weltraum gibt es unterschiedliche Ansätze. Diese lassen sich in zerstörende und zerstörungsfreie Verfahren einteilen. Zerstörungsfreie Verfahren zeichnen sich dadurch aus, dass eine Fernerkundung des Weltraummüll-Objektes mittels eines Meßgerätes (aktive Interaktion) erfolgt. Beispielhaft können hier bodengestützte Radar- und Teleskopanlagen genannt werden, die unter anderem für eine Bahnvermessung der Weltraummüll-Objekte und somit zur Frühwarnungen eingesetzt werden. Mittels bodengestützten Anlagen lassen sich Weltraummüll-Objekte mit einem Durchmesser von ca. 10 cm im LEO und ca. 1 m im geostationären Orbit (GEO) operationell vermessen. Kleinere Weltraummüll-Objekte, z.B. mit 5 cm Durchmesser im LEO oder mit 10 cm Durchmesser im GEO, sind sporadisch detektierbar. Weltraummüll-Objekte mit einem Durchmesser kleiner 2 cm sind im LEO nicht nachweisbar. Die Erfassung von Weltraummüll mittels bodengestützter Radar- und Teleskopanlagen ist derzeit die meistgenutzte Methode. Radar- und Teleskopanlagen für die Detektion von Weltraummüll können sowohl bodengestützt als auch weltraumgestützt sein. Aktuell sind die meisten Geräte für die Detektion von Weltraummüll jedoch bodengestützt.

Bei zerstörenden Verfahren schlägt ein zu messendes Weltraummüll-Objekt auf das Meßgerät "gewollt" ein. Zerstörende Verfahren fungieren als "In-Situ"-Meßinstrumente direkt im Orbit und liefern Meßwerte bezüglich kleiner Weltraummüll-Objekte (Durchmesser im Bereich von µm bis cm), die mittels Radar- und Teleskopanlagen nicht erfaßt werden können. Beispielhaft kann hier das am DLR-Bremen entwickelte SOLID-System genannt werden, das die Subsysteme eines Satelliten (Solarpaneele und Lageregelungssystem) nutzt. Eine Zusammenfassung existierender In-Situ-Detektoren kann z.B. der Arbeit "Bauer, Waldemar, Space-Debris-Detektion zur Validierung von Simulations-Modellen, DLR-Forschungsbericht, 2015-08" entnommen werden. Weltraummüll-Objekte mit einem Durchmesser von ca. 1 cm sind für unbemannte Satelliten kritisch, da diese Weltraummüll-Objekte eine Mission im Falle einer Kollision mit hoher Wahrscheinlichkeit beenden. Kleinere Weltraummüll-Objekte im Millimeter-Bereich können eine Mission einschränken. Diese Weltraummüll-Objekte können die Wandung eines Satelliten durchschlagen und verwundbare Komponenten im Inneren eines Satelliten beschädigen. Weltraummüll-Objekte im Bereich µm sind beispielsweise für empfindliche Instrumente (z.B. optische Teleskope) kritisch.

Die europäische Offenlegungsschrift EP 2 236 422 A1 offenbart eine Erfassungsvorrichtung für einen im Weltraum fliegenden Gegenstand, die ein Erfassungsplattenelement umfasst, das in einer vorbestimmten Anordnungsteilung mehrere leitfähige Erfassungsleitungen auf einer nicht-leitfähigen Dünnschicht hält, die in einer Weltraumumgebung freigelegt werden kann. Weiterhin umfasst die Erfassungsvorrichtung eine Erfassungsschaltung, die mit jeder Erfassungsleitung verbunden ist, wobei eine Erfassung des im Weltraum fliegenden Gegenstandes, der mit dem Erfassungsplattenelement zusammengestoßen ist, durch die Erfassungsschaltung ermöglicht wird, wenn eine Erfassungsleitung auf dem Erfassungsplattenelement durch einen Zusammenstoß mit einem im Weltraum fliegenden Gegenstand unterbrochen wird.

Aus der US-amerikanischen Offenlegungsschrift US 2012 / 0318 925 A1 ist ein Verfahren und System zur multidimensionalen Detektion einer Beschädigung einer aufblasbaren Raumplattform bekannt. Die Raumplattform weist eine äußere Struktur auf, die eine Mehrzahl von Schichten aufweist, wobei die Schichten abwechselnd Detektions- und Isolationsschichten bilden und durch eine dreidimensionale leitende Gitterstruktur miteinander verbunden sind. Die Detektionsschichten sind elektrisch leitend ausgebildet. Die Detektion einer Beschädigung basiert auf einer Änderung von durch eine Beschädigung einer oder mehreren Detektionsschicht oder Detektionsschichten oder der Gitterstruktur hervorgerufenen elektrischen Eigenschaften, wobei ein Kontrollgerät vorgesehen ist, dass dazu ausgebildet ist, eine oder mehrere Schichten oder Teile der Gitterstruktur zu deaktivieren.

Aus der US-amerikanischen Offenlegungsschrift US 2012 / 0188078 A1 ist ein Schadenserkennungs- und -sanierungssystem für ein Objekt bekannt. Zur Schadenserkennung weist das Schadenserkennungssystem eine erste Schicht auf, die elektrisch leitfähige Leiter auf einem nichtleitenden Substrat aufweist, wobei durch die elektrisch leitfähigen Leiter ein elektromagnetisches Signal von einem Eingangskopplungspunkt zu einem Ausgangskopplungspunkt leitbar ist. Ein Schaden wird durch den Vergleich des elektromagnetischen Signals von dem Eingangskopplungspunkt zu dem Ausgangskopplungspunkt erkannt.

Aus der japanischen Offenlegungsschrift JP 2012 - 116349 A ist ebenfalls ein Schadenserkennungssystem für ein Objekt bekannt. Auch hier sind elektrische Leiter vorhanden, durch die ein elektromagnetisches Signal leitbar ist. Ein Schaden wird erkannt, wenn die Durchleitung des Signals unterbrochen ist.

Aus der internationalen Anmeldung 2016 / 164 758 A1 ist schließlich ein phasengesteuertes Array-Antennensystem bekannt. Mit dem Array-Antennensystem kann ein Modell der Ionosphäre erzeugt werden, wobei Puls und Amplitude der inkohärenten Streuung zu der Profilelektronenzahldichte der Ionosphäre bestimmt wird.

Aus der XP000523499 ist ein System für die Erfassung von Weltraummüll-Objekten bekannt, wobei das System eine Sandwichstruktur aus zwei leitfähigen Schichten, die durch eine nicht leitfähige Schicht getrennt sind, aufweist, wobei an die zwei leitfähigen Schichten elektrische Spannungen anlegbar sind und die äußere leitfähige Schicht durch den Aufprall eines Weltraummüll-Objekts mechanisch veränderbar ist, wobei sich durch die mechanische Veränderung der äußeren leitfähigen Schicht einer ihrer elektrischen Parameter verändert.

Allen bekannten Systemen ist gemeinsam, dass sie hohe Kosten verursachen und größtenteils nicht in der Lage sind, kleinste Partikel zu erfassen. Heutige Vorhersagen basieren auf Simulations-Modellen, die kaum Meßwerte zur Validierung verwenden.

Aufgabe der Erfindung ist es, ein auf einem künstlichen Weltraumflugkörper installierbares System für die Erfassung von Weltraummüll-Objekten anzugeben, das in der Lage ist, kleinste Partikel bis in den µm-Bereich hinunter zu erfassen, kostengünstig ist und keine zusätzliche Last einem im Weltraum fliegenden Objekt hinzufügt. Eine weitere Aufgabe der Erfindung besteht darin, ein Verfahren zur Erfassung von Weltraummüll-Objekten im Weltraum mittels des Systems anzugeben.

Erfindungsgemäß wird diese Aufgabe durch ein System mit den Merkmalen des unabhängigen Anspruches 1 gelöst. Vorteilhafte Weiterbildungen des Systems ergeben sich aus den Unteransprüchen 2 bis 8. Die Aufgabe wird ferner durch ein Verfahren nach Anspruch 9 gelöst. Vorteilhafte Ausführungsformen des Verfahrens ergeben sich aus den Unteransprüchen 10 bis 13.

Ein erfindungsgemäßes System für die Erfassung von Weltraummüll-Objekten ist auf einem künstlichen Weltraumflugkörper installierbar und weist mindestens eine Erfassungseinrichtung, eine Umschalteinrichtung, eine Messelektronik und einen Bordrechner mit einer Speichereinrichtung auf. Dabei weist die Erfassungseinrichtung mindestens eine Planarantenne auf, wobei unter Planarantenne jede flächige Antenne verstanden wird. Es ist nicht erforderlich, dass die flächige Antenne absolut eben ist. Auch werden im Wesentlichen flächige Antennen mit einer Oberflächenstruktur unter dem Begriff Planarantenne verstanden. Die Planarantenne weist an ihrer Oberfläche eine Sandwichstruktur aus zwei leitfähigen Schichten, die durch eine nicht leitfähige Schicht getrennt sind, auf, wobei an die zwei leitfähigen Schichten elektrische Spannungen anlegbar sind und zumindest die äußere leitfähige Schicht durch den Aufprall eines Weltraummüll-Objekts mechanisch veränderbar ist. Durch die mechanischen Veränderung zumindest der äußeren leitfähigen Schicht verändert sich zumindest ein elektrischer Parameter der Planarantenne, wobei dieser Parameter messbar ist und aus dessen Veränderung auf das Auftreffen eines Weltraummüll-Objektes und die Größe des aufprallenden Weltraummüll-Objektes geschlossen werden kann. Erfindungsgemäß ist in einer vorteilhaften Ausführungsform die Messelektronik dazu eingerichtet, die durch die mechanische Veränderung der mindestens äußeren leitfähigen Schicht hervorgerufene Veränderung eines elektrischen Parameters der Planarantenne zu erfassen.

Die Sandwichstruktur aus zwei leitfähigen Schichten, die durch eine nicht leitfähige Schicht getrennt sind, stellt einen Kondensator dar. Der sich ändernde elektrische Parameter kann beispielsweise die Kapazität des Kondensators sein. Durch eine mechanischen Veränderung, beispielsweise eine Deformation, zumindest der äußeren leitfähigen Schicht ändert sich die Kapazität des Kondensators. Der sich ändernde elektrische Parameter kann beispielsweise auch die Impedanz der Planarantenne sein. Durch eine mechanische Veränderung, beispielsweise eine Deformation, zumindest der äußeren leitfähigen Schicht ändert sich auch die Impedanz der Planarantenne.

In einer vorteilhaften Ausführungsform ist die Messelektronik dazu eingerichtet, gemeinsam mit der Sandwichstruktur der Planarantenne einen elektrischen Schwingkreis zu bilden. Dazu übernimmt die Messelektronik die Funktion einer Spule. Bei diesem Schwingkreis wird Energie zwischen dem magnetischen Feld der Spule und dem elektrischen Feld des Kondensators periodisch mit einer bestimmten Frequenz ausgetauscht, wodurch abwechselnd hohe Stromstärke oder hohe Spannung vorliegen. Wird ein solcher Schwingkreis durch einen Impuls periodisch angestoßen, führt er periodische erzwungene Schwingungen aus, deren Frequenz identisch mit der Erregerfrequenz ist. Dabei treten Resonanzerscheinungen auf. Die Messelektronik ist dazu eingerichtet, diese Resonanzerscheinungen zu erfassen.

In einer weiteren vorteilhaften Ausführungsform ist der Bordrechner dazu eingerichtet, aus der Veränderung der erfassten Resonanzerscheinungen auf das Auftreffen eines Weltraummüll-Objekts und die Stärke des Aufpralls des Weltraummüll-Objekts auf die Planarantenne zu schließen. Trifft ein Weltraummüll-Objekt auf die Oberfläche der Planarantenne, so wird zumindest die oberste leitfähige Schicht der Sandwichstruktur mechanisch verändert, beispielsweise deformiert. Durch den damit veränderten Abstand der beiden als Elektroden dienenden leitfähigen Schichten der Sandwichstruktur ändert sich die Kapazität. Weiterhin ändert sich die Resonanzfrequenz des Schwingkreises. Aus der Größe dieser Änderungen lässt sich beispielsweise über eine inverse Fourieranalyse, beispielsweise im Zeit- oder Frequenzbereich auf die Größe des auftreffenden Weltraummüll-Objekts schließen.

In einer weiteren vorteilhaften Ausführungsform ist die Messelektronik dazu eingerichtet, die Impedanz der Planarantenne zu erfassen. Dabei kann die Erfassung der Impedanz zusätzlich oder alternativ zu der Erfassung der Kapazität beziehungsweise der Resonanzerscheinungen erfaßt werden. Weiterhin hat es sich als vorteilhaft erwiesen, wenn der Bordrechner dazu eingerichtet ist, aus der Veränderung der erfassten Impedanzen auf das Auftreffen eines Weltraummüll-Objekts und auf die Stärke des Aufpralls des Weltraummüll-Objekts auf die Planarantenne zu schließen.

In einer weiteren vorteilhaften Ausführungsform ist der Betrieb der mindestens einen Planarantenne zwischen den Funktionen Senden und Empfangen einerseits und der Detektion von Weltraummüll-Objekten andererseits mittels der Umschalteinrichtung umschaltbar. Dadurch erfüllt die Planarantenne die beiden Funktionen Senden und Empfangen einerseits und der Detektion von Weltraummüll-Objekten andererseits.

Eine eigene Erfassungseinrichtung für die Erfassung von Weltraummüll-Objekten ist nicht erforderlich, sondern die an Satelliten ohnehin vorhandene Planarantenne kann für die Erfassung von Weltraummüll-Objekten genutzt werden. Somit braucht keine zusätzliche Last an einem Satelliten angebracht werden, um Weltraummüll-Objekte zu erfassen. Die Erfassung ist somit kostengünstig möglich. Da auch kleinste Weltraummüll-Objekte im µm-Bereich eine mechanische Veränderung, beispielsweise eine Deformation, zumindest der äußeren leitfähigen Schicht bewirken können, ist auch die Detektion solcher kleinen Weltraummüll-Objekte mit dem System möglich.

Es hat sich weiterhin als vorteilhaft erwiesen, wenn das Erfassungssystem mindestens zwei Planarantennen aufweist. Die mindestens zwei Planarantennen haben redundante Funktionen. Auch nach einer endgültigen Beschädigung einer Planarantenne oder eines Teils einer Planarantenne ist damit weiterhin Funkkommunikation und die Erfassung von Weltraummüll-Objekten möglich.

Das erfindungsgemäße Verfahren zur Erfassung von für Weltraummüll-Objekten im Weltraum ist dadurch gekennzeichnet, dass die Detektion durch Messung eines sich bei einem Aufprall eines Weltraummüll-Objekts veränderndem elektrischen Parameters der Erfassungseinrichtung erfolgt, wobei aus der Veränderung des elektrischen Parameters auf die Stärke der Aufpralls geschlossen wird.

Es hat sich als vorteilhaft erwiesen, wenn die Umschalteinrichtung die Erfassungseinrichtung in die Funktion Detektion schaltet, anschließend die Messelektronik mindestens einen elektrischen Parameter der Erfassungseinrichtung misst und dem Bordrechner zur Verfügung stellt, anschließend der Bordrechner den gemessenen Wert in der Speichereinrichtung speichert und mit einem in einem vorherigen Messzyklus gespeicherten Wert des Parameters vergleicht, wobei in der Speichereinrichtung mindestens ein zuvor gespeicherter Initialwert für jeden Parameter vorhanden ist, und anschließend die Differenz zwischen dem aktuellen Messwert und dem in dem vorherigen Messzyklus gespeicherten Wert des Parameters in der Speichereinrichtung speichert.

Als Initialwert kann beispielsweise der Wert eines elektrischen Parameters der neuen, unbeschädigten Planarantenne in der Speichereinheit hinterlegt werden.

In einer vorteilhaften Ausführungsform sendet der Bordrechner die gespeicherten Werte des elektrischen Parameters nach Beendigung des Messzyklus und Umschaltung der Planarantenne in den Sende-/Empfangsmodus über die mindestens eine Planarantenne an eine Bodenstation.

In einer weiteren vorteilhaften Ausführungsform wertet der Bordrechner die Differenz zwischen dem aktuellen Messwert und dem in dem vorherigen Messzyklus gespeicherten Wert beziehungsweise den Initialwert des elektrischen Parameters aus, indem aus der Differenz der Messwerte eine Hilfsgröße gebildet wird, die eine Aussage über die Stärke des Aufpralls eines Weltraummüll-Objekts auf die Erfassungseinrichtung enthält, und der Bordcomputer die Hilfsgröße über die mindestens eine Planarantenne an eine Bodenstation sendet.

In einer weiteren vorteilhaften Ausführungsform sendet der Bordcomputer zusätzlich die gespeicherten Werte des elektrischen Parameters nach Beendigung des Messzyklus über die mindestens eine Planarantenne an eine Bodenstation.

Mit dem erfindungsgemäßen System und dem erfindungsgemäßen Verfahren können kleinste Partikel von Weltraummüll-Objekten von wenigen µm Größe mit Hilfe von an künstlichen Weltraumflugkörpern, wie zum Beispiel Satelliten, üblicherweise angebrachten Planarantennen detektiert werden, ohne dass die Hauptfunktionen dieser Antennen eingeschränkt wird. Das System kann zusätzlich auf jedem Satelliten implementiert werden, da Antennen generell benötigt werden, um die Funkkommunikation des Satelliten sicherzustellen. Die üblichen Antennen sind skalierbar auf die im Satellitenfunk üblichen Funkfrequenzen. Mit dem System ist es möglich, neben der eigentlichen Aufgabe der Antenne, Signale zu empfangen und zu senden, zusätzliche Erkenntnisse über Weltraummüll-Objekte gewinnen. Damit ist kostengünstige Forschung in dieser Richtung realisierbar, ohne dass eine flächenintensive Primärnutzlast auf einem Satelliten oder Raumfahrzeug integriert werden muss. Die Auswertung der aufgenommenen elektrischen Parameter hinsichtlich des Auftretens beziehungsweise der Größe eines aufprallenden Weltraummüll-Objektes kann wahlweise durch den Bordrechner oder durch einen Rechner an einer Bodenstation durchgeführt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 Prinzipskizze des erfindungsgemäßen Systems 10
Fig. 2 Darstellung der Reflexionsdämpfung einer Planarantenne 12 nach Beschädigung durch den Aufprall eines Weltraummüll-Objekts und Veränderung der Impedanz

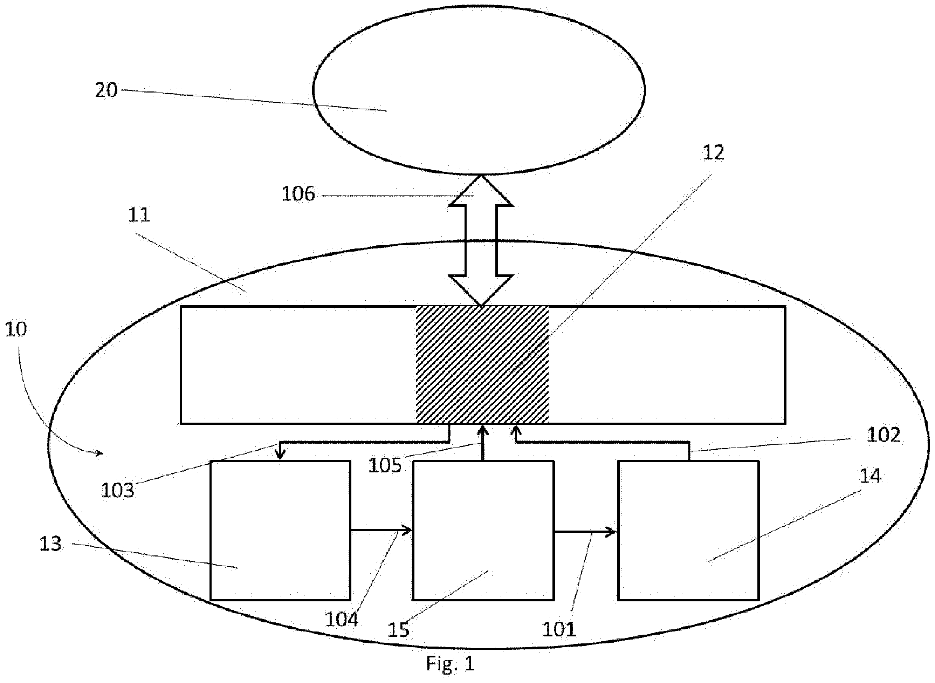

Fig. 1 zeigt eine Prinzipskizze des erfindungsgemäßen Systems 10. Das System 10 ist auf einem Satelliten 11 installiert. Der Bordrechner 15 gibt ein Signal 101 an die Umschalteinrichtung 14 zum Beginn eines Messzyklus. Die Umschalteinrichtung 14 sendet ein Signal 102 an die Planarantenne 12, worauf hin die Planarantenne 12 von der Funktion Senden/Empfangen auf die Funktionen Messen umschaltet. Vorteilhafterweise wartet der Bordrechner 15 eine Funkpause ab, ehe er das Signal 101 zum Beginn eines Messzyklus ausgibt. In der Funktion Detektion mißt die Messelektronik 13 mindestens einen elektrischen Parameter der Planarantenne 12 und stellt den gemessenen Wert dem Bordrechner 15 zur Verfügung.

Die Planarantenne 12 weist an ihrer Oberfläche eine Sandwichstruktur aus zwei leitfähigen Schichten, die durch eine nicht leitfähige Schicht getrennt sind, auf, wobei an die zwei leitfähigen Schichten elektrische Spannungen anlegbar sind. Diese Sandwichstruktur stellt einen Kondensator dar. Trifft ein Weltraummüll-Objekt auf die äußere leitfähige Schicht, so wird diese mechanisch verändert, beispielsweise deformiert. Durch die mechanische Veränderung zumindest der äußeren leitfähigen Schicht verändert sich zumindest ein elektrischer Parameter der Planarantenne 12.

In einer Ausführungsform ist die Messelektronik 13 dazu eingerichtet, gemeinsam mit der Sandwichstruktur der Planarantenne 12 als Kondensator einen elektrischen Schwingkreis zu bilden. Dazu übernimmt die Messelektronik 13 die Funktion einer Spule. Bei diesem Schwingkreis wird Energie zwischen dem magnetischen Feld der Spule und dem elektrischen Feld des Kondensators periodisch mit einer bestimmten Frequenz ausgetauscht, wodurch abwechselnd hohe Stromstärke oder hohe Spannung vorliegen. Wird der Schwingkreis durch einen Impuls periodisch angestoßen, dann führt er periodische erzwungene Schwingungen aus, deren Frequenz identisch mit der Erregerfrequenz ist. Dabei treten Resonanzerscheinungen auf. Die Messelektronik 13 ist dazu eingerichtet, diese Resonanzerscheinungen zu erfassen. Wird die äußere leitfähige Schicht durch den Aufprall eines Weltraummüll-Objekts deformiert, verändert sich der Abstand dieser Schicht zu der hinter der nicht leitfähigen Mittelschicht liegenden leitfähig Schicht, wodurch sich die Kapazität des Kondensators und damit die Resonanzfrequenz des Schwingkreises verändert. Die Messelektronik 13 erfaßt diese Veränderung der Resonanzfrequenz.

In einer alternativen Ausführungsform ist die Messelektronik 13 dazu eingerichtet, die Impedanz der Planarantenne 12 zu erfassen. Durch die mechanische Veränderung zumindest der äußeren leitfähigen Schicht bei einem Aufprall eines Weltraummüll-Objekts ändert sich auch die Impedanz der Planarantenne 12.

Die Messdaten 103 werden von der Planarantenne 12 an die Messelektronik 13 gesendet, von der Messelektronik 13 aufbereitet und als aufbereitete Messdaten 104 an den Bordrechner 15 gesendet. Der Bordrechner 15 verfügt über eine Speichereinrichtung, in der die Messdaten 104 gespeichert werden. Die Messdaten 104 können in dem Bordrechner 15 ausgewertet werden, in dem der Bordrechner 15 den gemessenen Wert mit einem in einem vorherigen Messzyklus gespeicherten Wert des Parameters vergleicht, wobei in der Speichereinrichtung mindestens ein zuvor gespeicherter Initialwert für jeden Parameter vorhanden ist, und anschließend die Differenz zwischen dem aktuellen Messwert und dem in dem vorherigen Messzyklus gespeicherten Wert des Parameters in der Speichereinrichtung speichert. Der Bordrechner 15 kann dazu eingerichtet sein, aus der Veränderung der erfassten Resonanzerscheinungen auf das Auftreffen eines Weltraummüll-Objekts und auf die Stärke des Aufpralls des Weltraummüll-Objekts auf die Planarantenne 12 zu schließen. Aus der Größe der Änderung der Resonanzfrequenz lässt sich beispielsweise über eine inverse Fourieranalyse auf die Größe des auftreffenden Weltraummüll-Objekts schließen. Der Bordrechner 15 kann auch dazu eingerichtet sein, aus der Veränderung der erfassten Impedanzen auf das Auftreffen eines Weltraummüll-Objekts und auf die Stärke des Aufpralls des Weltraummüll-Objekts auf die Planarantenne 12 zu schließen. Aus der Größe der Änderung der Impedanz lässt sich ebenfalls beispielsweise über eine inverse Fourieranalyse auf die Größe des auftreffenden Weltraummüll-Objekts schließen.

Nach Abschluss eines Messzyklus sendet der Bordrechner 15 ein Signal 101 an die Umschalteinrichtung 14, die ein Signal 102 zum Umschalten in den Sende-/Empfangsbetrieb an die Planarantenne 12 sendet.

Der Bordrechner 15 stellt die Auswertedaten 105 in Form der oben dargestellten Berechnungen oder auch als Rohdaten der Planarantenne 12 zur Verfügung, nachdem diese wieder in den Sende-/Empfangsbetrieb umgestellt ist. Die Planarantenne 12 sendet die Daten als Funkdaten 106 an eine Bodenstation 20.

Mit diesem System und dem zugehörigen Verfahren können kleinste Partikel von Weltraummüll-Objekten von wenigen µm Größe mit Hilfe von an Satelliten 11 angebrachten Planarantennen 12 detektiert werden, ohne dass die Hauptfunktionen dieser Planarantennen 12 eingeschränkt wird. Mit dem System 10 ist es möglich, neben der eigentlichen Aufgabe der Planarantenne 12, Signale zu empfangen und zu senden, zusätzliche Erkenntnisse über Weltraummüll-Objekte zu gewinnen. Mit diesem "Dual-use"-Prinzip ist eine kostengünstige Forschung über auch kleinste Weltraummüll-Objekte realisierbar, ohne dass eine flächenintensive Primärnutzlast auf einem Satelliten 11 oder Raumfahrzeug integriert werden muss.

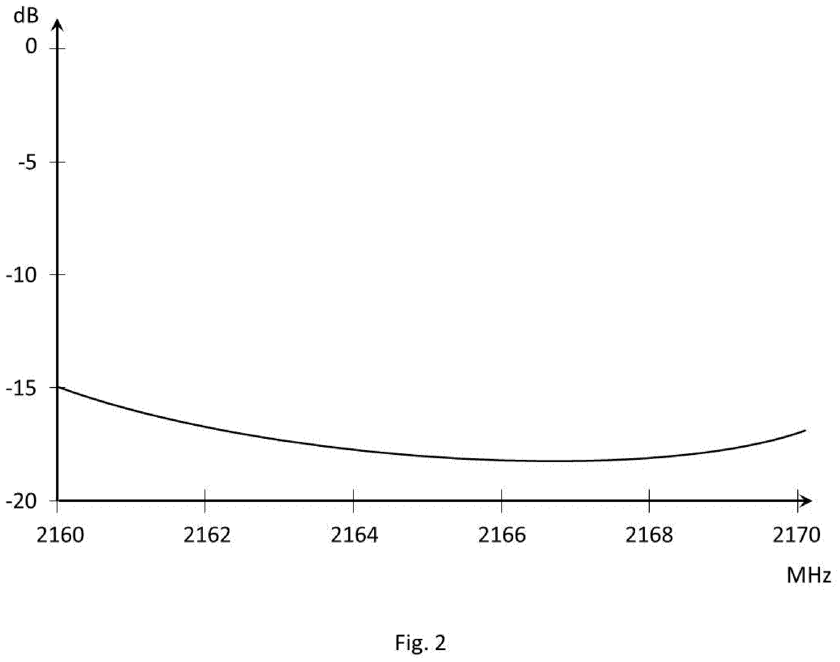

Fig. 2 ist die Darstellung der Reflexionsdämpfung einer Planarantenne 12 nach Beschädigung und Veränderung der Impedanz. Durch die Veränderung der Impedanz, die sich wiederum durch das Auftreffen eines Weltraummüll-Objekts auf die Planarantenne 12 verändert, kommt es frequenzabhängig zu einer veränderten Dämpfung der Reflexion der Planarantenne 12.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 10: System
- 11: Künstlicher Weltraumflugkörper, Satellit
- 12: Planarantenne
- 13: Messelektronik
- 14: Umschalteinrichtung
- 15: Bordrechner
- 20: Bodenstation
- 101: Signal zum Beginn/Ende eines Messzyklus
- 102: Umschaltsignal von Senden/Empfangen auf Messen und umgekehrt
- 103: Messdaten
- 104: aufbereitete Messdaten
- 105: Auswertedaten
- 106: Funkdaten

## Patentansprüche

1. Auf einem künstlichen Weltraumflugkörper (11) installierbares System (10) für die Erfassung von Weltrmmüll-Objekten, wobei das System (10) mindestens eine Erfassungseinrichtung, eine Umschalteinrichtung (14), eine Messelektronik (13) und einen Bordrechner (15) mit einer Speichereinrichtung aufweist, die Erfassungseinrichtung mindestens eine Planarantenne (12) aufweist, wobei die Planarantenne (12) an ihrer Oberfläche eine Sandwichstruktur aus zwei leitfähigen Schichten, die durch eine nicht leitfähige Schicht getrennt sind, aufweist, wobei an die zwei leitfähigen Schichten elektrische Spannungen anlegbar sind und zumindest die äußere leitfähige Schicht durch den Aufprall eines Weltraummüll-Objekts mechanisch veränderbar ist, wobei sich durch die mechanische Veränderung zumindest der äußeren leitfähigen Schicht zumindest einer ihrer elektrischen Parameter verändert, wobei diese Veränderung messbar ist und wobei aus dieser Veränderung auf das Auftreffen eines Weltraummüll-Objekts schließbar ist.

2. System (10) gemäß Anspruch 1,
**dadurch gekennzeichnet,**
**dass** die Messelektronik (13) dazu eingerichtet ist, die durch die mechanische Veränderung der mindestens äußeren leitfähigen Schicht hervorgerufene Veränderung eines elektrischen Parameters der Planarantenne (12) zu erfassen.

3. System (10) gemäß Anspruch 2,
**dadurch gekennzeichnet,**
**dass** die Messelektronik (13) dazu eingerichtet ist, gemeinsam mit der Sandwichstruktur der Planarantenne (12) einen elektrischen Schwingkreis zu bilden und auftretende Resonanzerscheinungen zu erfassen.

4. System (10) gemäß Anspruch 3,
**dadurch gekennzeichnet,**
**dass** der mindestens eine sich durch das Auftreffen eines Weltraummüll-Objekts auf die äußere leitfähige Schicht verändernde elektrische Parameter mindestens der äußeren leitfähigen Schicht die Resonanzerscheinung des elektrischen Schwingkreises ist und der Bordrechner (15) dazu eingerichtet ist, aus der Veränderung der erfassten Resonanzerscheinungen auf das Auftreffen eines Weltraummüll-Objekts und auf die Stärke des Aufpralls des Weltraummüll-Objekts auf der Planarantenne (12) zu schließen.

5. System (10) gemäß einem der Ansprüche 2 bis 4,
**dadurch gekennzeichnet,**
**dass** die Messelektronik (13) dazu eingerichtet ist, die Impedanz der Planarantenne (12) zu erfassen.

6. System (10) gemäß Anspruch 5,
**dadurch gekennzeichnet,**
**dass** der Bordrechner (15) dazu eingerichtet ist, aus der Veränderung der erfassten Impedanzen auf das Auftreffen eines Weltraummüll-Objekts und auf die Stärke des Aufpralls des Weltraummüll-Objekts auf der Planarantenne zu schließen.

7. System (10) gemäß einem der vorherigen Ansprüche,
**dadurch gekennzeichnet,**
**dass** der Betrieb der mindestens einen Planarantenne (12) zwischen den Funktionen Senden und Empfangen einerseits und der Detektion von Weltraummüll-Objekten andererseits mittels der Umschalteinrichtung (14) umschaltbar ist.

8. System (10) gemäß einem der vorherigen Ansprüche,
**dadurch gekennzeichnet,**
**dass** das Erfassungssystem mindestens zwei Planarantennen (12) aufweist.

9. Verfahren zur Erfassung von für Weltraummüll-Objekten im Weltraum mittels des Systems (10) gemäß einem der vorherigen Ansprüche,
**dadurch gekennzeichnet,**
**dass** die Detektion durch Messung eines sich bei einem Aufprall eines Weltraummüll-Objekts veränderndem elektrischen Parameters der Erfassungseinrichtung erfolgt, wobei aus der Veränderung des elektrischen Parameters auf die Stärke der Aufpralls geschlossen wird.

10. Verfahren gemäß Anspruch 9,
**dadurch gekennzeichnet,**
**dass** die Umschalteinrichtung (14) die Erfassungseinrichtung in die Funktion Detektion schaltet, anschließend die Messelektronik (13) mindestens einen elektrischen Parameter der Erfassungseinrichtung misst und dem Bordrechner (15) zur Verfügung stellt, anschließend der Bordrechner (15) den gemessenen Wert in der Speichereinrichtung speichert und mit einem in einem vorherigen Messzyklus gespeicherten Wert des Parameters vergleicht, wobei in der Speichereinrichtung mindestens ein zuvor gespeicherter Initialwert für jeden Parameter vorhanden ist, und anschließend die Differenz zwischen dem aktuellen Messwert und dem in dem vorherigen Messzyklus gespeicherten Wert des Parameters in der Speichereinrichtung speichert.

11. Verfahren gemäß Anspruch 10,
**dadurch gekennzeichnet,**
**dass** der Bordrechner (15) die gespeicherten Werte des elektrischen Parameters nach Beendigung des Messzyklus über die mindestens eine Planarantenne (12) an eine Bodenstation (20) sendet.

12. Verfahren gemäß Anspruch 11,
**dadurch gekennzeichnet,**
**dass** der Bordrechner (15) die Differenz zwischen dem aktuellen Messwert und dem in dem vorherigen Messzyklus gespeicherten Wert des elektrischen Parameters auswertet, indem aus der Differenz der Messwerte eine Hilfsgröße gebildet wird, die eine Aussage über die Stärke des Aufpralls eines Weltraummüll-Objekts auf die Erfassungseinrichtung enthält, und der Bordcomputer (15) die Hilfsgröße über die mindestens eine Planarantenne (12) an eine Bodenstation sendet.

13. Verfahren gemäß Anspruch 12,
**dadurch gekennzeichnet,**
**dass** der Bordcomputer (15) zusätzlich die gespeicherten Werte des elektrischen Parameters nach Beendigung des Messzyklus über die mindestens eine Planarantenne (12) an eine Bodenstation sendet.

## Claims

1. On an artificial spacecraft (11) installable system (10) for the detection of space debris objects, wherein the system (10) comprises at least one detection device, a switching device (14), a measuring electronics (13) and an on-board computer (15) having a memory device, the detection device comprises at least one planar antenna (12), wherein the planar antenna (12) comprises on its surface a sandwich structure of two conductive layers, which are separated via a non-conductive layer, wherein on the two conductive layers electrical tension can be applied and at least the outer conductive layer is mechanically changeable through the impact of a space debris object, wherein due to the mechanical change of the at least outer conductive layer at least one of their electrical parameters is being changed, wherein this change is measurable and wherein via this change the impact of a space debris object can be determined.

2. System (10) according to claim 1, **characterized in that** the measuring electronics (13) is configured to detect change of an electrical parameter of the planar antenna (12) caused by the mechanical change of the at least outer conductive layer.

3. System (10) according to claim 2, **characterized in that** the measuring electronics (13) is configured to form together with the sandwich structure of the planar antenna (12) an electrical resonant circuit and to detect occurring resonance phenomena.

4. System (10) according to claim 3, **characterized in that** the at least one due to the impact of a space debris object on the outer conductive layer changing electrical parameters of the at least outer conductive layer is the resonance phenomenon of the electric resonant circuit and the board computer (15) is adapted to conclude via the change of the detected resonance phenomena to the impact of a space debris object and to conclude to the strength of the impact of the space debris object on the planar antenna (12).

5. System (10) according to one of claims 2 to 4, **characterized in that** the measuring electronics (13) is configured to detect the impedance of the planar antenna (12).

6. System (10) according to claim 5, **characterized in that** the board computer (15) is adapted to conclude from the change the detected impedances to the impact of a space debris object and to conclude to the strength of the impact of the space debris object on the planar antenna.

7. System (10) according to one of the preceding claims, **characterized in that** the operation of the at least one planar antenna (12) between the functions Sending and receiving on the one hand and the detection of space debris objects on the other hand is switchable by means of the switching device (14).

8. System (10) according to one of the preceding claims, **characterized in that** the detection system has at least two planar antennas (12).

9. Method for detecting space debris objects in space by means of the system (10) according to one of the preceding claims, **characterized in that** the detection takes place by measuring an electrical parameter of the detection device which changes in the event of an impact of a space debris object, wherein from the change of the electrical parameter ones can conclude to the magnitude of the impact.

10. The method according to claim 9, **characterized in that** the switching device (14) switches the detection device in the function detection, then the measuring electronics (13) measures at least one electrical parameters of the detection device and makes available to the board computer (15), then the board computer (15) stores the measured value in the memory device and compares with in a previous measurement cycle stored value of the parameter, wherein in the memory device at least one previously stored initial value exists for each parameter, and then the difference between the actual measured value and stores the in the previous measurement cycle stored value of the parameter in the memory device.

11. The method according to claim 10, **characterized in that** the board computer (15) sends the stored values of the electrical parameter after termination of the measuring cycle via the at least one planar antenna (12) to a terrestrial station (20).

12. The method according to claim 11, characterized that the board computer (15) evaluates the difference between the actual measured value and the in previous measurement cycle stored value of the electrical parameter by creating an auxiliary variable from the difference of the measured values, that contains a statement about the strength of the impact of a space debris object on the detection device, and the board computer (15) sends the auxiliary variably via the at least one planar antenna (12) **sends** to a terrestrial station.

13. Method according to claim 12, **characterized in that** the board computer (15) sends additionally the stored values of the electrical parameter after completion of the measuring cycle via the at least one planar antenna (12) to a terrestrial station.

## Revendications

1. Système (10) installable sur un missile spatial artificiel (11), pour le détection d'objets du déchets spatiaux, dans lequel le système (10) comporte au moins un dispositif de détection, un dispositif de commutation (14), une électronique de mesure (13) et un ordinateur de bord (15) avec un dispositif de mémoire, le dispositif de détection comprenant au moins un antenne planaire (12), dans laquelle l'antenne planaire (12) comprenant sur sa surface une structure sandwich de deux couches conductrices séparés par une couche non conductrice, dans lequel à les deux couches conductrices électriques tension peut être appliquée et au moins la couche conductrice externe est mécaniquement variable à travers de l'impact d'un objet de déchets spatial, dans lequel par le transformation d'au moins le couche conductrice externe le changement de leurs paramètres électriques peut être variable, e dans lequel par le changement l'impact d'un objet de déchets spatiaux est mesurable et dans lequel ce changement est mesurable et dans lequel par le changement l'impact d'un objet de déchets spatiaux peut être détermine.

2. Système (10) selon la revendication 1, **caractérisé en ce que** l'électronique de mesure (13) est configurée pour déterminé le changement d'un paramètre électrique de l'antenne planaire (12) par le variation provoqué par le variation mécanique d'au moins le couche conductrice externe.

3. Système (10) selon la revendication 2, **caractérisé en ce que** l'électronique de mesure (13) est configurée jointe avec le structure sandwich de l'antenne planaire (12) pour former un circuit résonant électrique et pour détecter les phénomènes de résonance qui se produisent.

4. Système (10) selon la revendication 3, **caractérisé en ce que** le au moins un paramètre électrique de le au moins couche conductrice externe - qui est modificable par l'impact d'un objet de déchets spatiaux sur la couche conductrice externe - est le phénomène de résonance, et que l'ordinateur de bord (15) est adapté pour déterminé l'impact de l'objet de déchets spatiaux et pour déterminé la force de l'impact de l'objet de déchets spatiaux sur l'antenne planaire (12).

5. Système (10) selon l'une des revendications 2 à 4, **caractérisé en ce que** l'électronique de mesure (13) est configurée pour déterminer l'impédance de l'antenne planaire (12).

6. Système (10) selon la revendication 5, **caractérisé en ce que** l'ordinateur de bord (15) est adapté, de la modification de les impédances détermines, de déterminer l'impact d'un objet de déchets spatiaux et de déterminer la force l'impact d'un objet de déchets spatiaux sur l'antenne planaire.

7. Système (10) selon l'une des revendications précédentes, **caractérisé en ce que** le fonctionnement de l'au moins une antenne planaire (12) entre les fonctions envoi et réception, d'une part, et le détection d'objets de déchets spatiaux, d'autre part, est commutable au moyen du dispositif de commutation (14).

8. Système (10) selon l'une des revendications précédentes, **caractérisé en ce que** le système de détection comporte au moins deux antennes planaires (12).

9. Méthode de détection d'objets de déchets spatiaux dans l'espace au moyen de le système (10) selon l'une des revendications précédentes, **caractérisé en ce que** la détection a lieu en mesurant d'un paramètre électrique modificable du dispositif de détection, mais de le changement du paramètre la magnitude de l'impact est déterminable.

10. Méthode selon la revendication 9, **caractérisé en ce que** le dispositif de commutation (14) connecte le dispositif de détection dans la fonction de détection, puis l'électronique de mesure (13) mesure au moins un paramètres des mesures, et le fait disponible a l'ordinateur de bord (15), puis l'ordinateur de bord (15) enregistrée la mesurée dans le mémoire et compare avec un valeur du paramètre enregistré dans un cycle de mesure précédent périphérique, dans laquelle dans le dispositif de mémoire il existe au moins une valeur initiale précédemment enregistrée pour chaque paramètre, et puis enregistrée dans la mémoire la différence entre le valeur actuelle et celle mémorisée dans le cycle de mesure précédent.

11. Méthode selon la revendication 10, **caractérisé en ce que** l'ordinateur de bord (15) envoie le valeurs du paramètre électrique via la au moins une antenne planaire (12) à une station terrestre (20).

12. Méthode selon la revendication 11, **caractérisé en ce que** l'ordinateur de bord (15) évalue la différence entre la valeur mesurée actuelle et le valeur du paramètre électrique enregistré dans le cycle de mesure précédent, tandis que une variable auxiliaire est formée, la quelle comporte une information sur la force de l'impact d'un objet de déchets sur le dispositif de détection, et l'ordinateur de bord (15) envoie la variable auxiliaire par le au moins une antenne planaire (12) à une station terrestre.

13. Méthode selon la revendication 12, **caractérisé en ce que** l'ordinateur de bord (15) envoie via la station terrestre en outre les valeurs du paramètre électrique mémorisée après terminer le cycle de mesure via la au moins une antenne planaire (12).
